# EUROPEAN PATENT APPLICATION

(11) **EP 2 246 588 A1**
(43) Date of publication of application: **03.11.2010**
(21) Application number: 09713728.5
(22) Date of filing: 25.02.2009
(51) Int. Cl.: F16G 5/16

(54) **JIG FOR ASSEMBLING BELT AND METHOD FOR ASSEMBLING BELT AND METHOD FOR PRODUCING BELT**

(30) Priority: 28.02.2008 JP 2008047852
(71) Applicant: Toyota Jidosha Kabushiki Kaisha, Toyota-shi, Aichi 471-8571 (JP)
(72) Inventor: IGUCHI, Tetsuji, Toyota-shi Aichi 471-8571 (JP); SAKAI, Noboru, Toyota-shi Aichi 471-8571 (JP); OHARA, Yukihiro, Toyota-shi Aichi 471-8571 (JP)
(74) Representative: TBK-Patent
(86) International application number: PCT/JP2009/053380
(87) International publication number: WO 2009/107642

(57) **Abstract**

To efficiently assemble or manufacture a belt by fastening a plurality of elements in a circular manner using a ring.

A pair of receiving members 23 and 26 for holding the ring 9 respectively comprises a first receiving face 37 to which the ring 9 is applied, and a second receiving face 28 which is formed outer circumferential side of the first receiving face 37 to hold the element 6 attached to the ring 9 therebetween. A thrust mechanism 30 is adapted to straighten a portion of the ring 9 between the receiving members 23 and 26 by moving at least one of the receiving members 23 and 26 away from the other receiving member thereby applying a tension to the ring 9, and to adjust a distance between the receiving members 23 and 26 thereby equalizing the tension being applied to the ring 9 in both of a case in which the ring 9 is applied to the receiving member 23 and 26 and a case in which the element 6 attached to the ring 9 is applied to the receiving member 23 and 26.

## Description

### TECHNICAL FIELD

This invention relates to an assembling apparatus, an assembling method and a manufacturing method for assembling a belt, by juxtaposing a plurality of plate-like elements in a same orientation and in a circular manner, and by fastening those elements by a ring.

### BACKGROUND ART

A belt formed by juxtaposing a plurality of metal pieces called an "element" or a "block" in a circular manner, and by fastening the juxtaposing metal pieces by an endless carrier called a "ring" or a "hoop" is known in the prior art to be used in a continuously variable transmission. The belt of this kind is adapted to transmit the torque by a pushing force among the metal pieces thus juxtaposed to be contacted to one another. Specifically, the metal pieces existing in the groove of a drive pulley are sequentially pushed out of the groove by a rotation of the pulley while pushing the metal pieces in front of those metal pieces. The metal pieces thus being pushed forward are eventually entered into a groove of a driven pulley. As a result, the torque of the drive pulley is transmitted to the driven pulley by such advancement of the metal pieces.

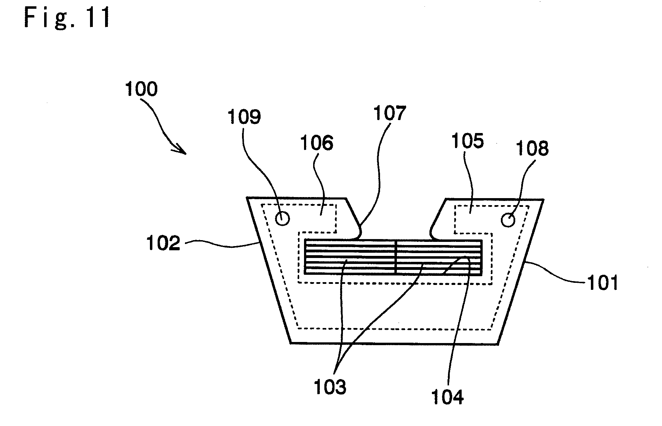

An example of the belt thus structured is disclosed in Japanese Patent Laid-Open No. 2000-205342. According to the teachings of Japanese Patent Laid-Open No. 2000-205342, an annular belt is formed by fastening a plurality of trapezoidal blocks using two rows of endless carriers. A block 100 is shown in Fig. 11 of the present application in more detail. The blocks 100 shown in Fig. 11 are juxtaposed annularly in an orientation to situate a short side thereof in an inner circumferential side. Lateral faces 101 and 102 of the block 100 thus juxtaposed are respectively inclined to be parallel to inner faces of a V-shaped groove of a not shown pulley. In the width center at the center of height of the block 100, there is formed a saddle face 104 on which the endless carriers 103 are disposed. A width of the saddle face 104 is wider than the total width of the carrier 103 arranged parallel to each other.

In addition, in order to prevent a detachment of the endless carrier 103 from the saddle face 104, in other words, in order to prevent a disengagement of the block 100 from the endless carrier 103, the block 100 is provided with stopper portions 105 and 106. Specifically, a shape of the stopper portions 105 and 106 is inverse L-shaped portion, and those the stopper portions 105 and 106 are erected respectively on both width ends of the saddle face 104 to cover width end portions of the endless carriers 103 from above. A clearance between the stopper portions 105 and 106 serves as an opening 107 to the saddle face 104. Protruding portions 108 and 109 having circular cross-section are formed on one of the faces (e.g., on the front face) of the stopper portions 105 and 106, and (not shown) concave portions are respectively formed on the opposite side of the protruding portions 108 and 109. Therefore, the protruding portions 108 and 109 are respectively inserted into the concave portions of the adjoining block 100.

The above-described endless carrier not only fastens the metal blocks juxtaposed annularly by contacting with the saddle face but also pulls out the blocks from the groove of the pulley. For this purpose, as taught by Japanese Patent Laid-Open No. 2000-205342, the block must be provided with the stopper portions. In order to situate the carrier on the width center of the block as taught by Japanese Patent Laid-Open No. 2000-205342, the stopper portions are erected on both width ends of the block thereby holding side edges of the carrier.

For this purpose, a clearance between the stopper portions, that is, a width of the opening has to be narrower than the total width of the endless carrier fastening the blocks. Therefore, in case of fastening the blocks by the carriers, the carriers are not allowed to pass though the opening of the block from above while being arranged parallel to each other as will be situated after the completion of the assembling work. That is, the blocks cannot be fastened by the carrier. In order to avoid such disadvantage, some sort of improvement is required to fasten the blocks by the endless carrier. However, any method or device for fastening the blocks continuously or efficiently by the carrier has not yet been developed in the prior art.

### DISCLOSURE OF THE INVENTION

The present invention has been conceived noting the technical problems thus far described, and its object is to efficiently assemble and manufacture a belt by fastening a plurality of elements in a circular manner by a ring.

According to the first invention of the present invention, there is provided a belt assembling apparatus for assembling a belt, by fastening a plurality of plate-like elements juxtaposed in a same orientation and in a circular manner using a ring, characterized by comprising: at least a pair of receiving members respectively comprising a first receiving face to which the ring is applied, and second receiving faces respectively extending radially outwardly from the first receiving face to hold the element attached to the ring therebetween; and a thrust mechanism, which straightens a portion of the ring between the receiving members by moving at least one of the receiving members away from the other receiving member to apply tension to the ring, and which adjusts a distance between the receiving members thereby equalizing the tension being applied to the ring in both of a case in which the ring is applied to the receiving member and a case in which the element attached to the ring is applied to the receiving member.

According to the second invention of the present invention, there is provided a belt assembling apparatus for assembling a belt, by fastening a plurality of plate-like elements juxtaposed in a same orientation and in a circular manner using a ring, characterized by comprising: at least a pair of receiving members to which the ring and the element attached to the ring are applied, and which move away from each other in a horizontal direction thereby applying a tension to the ring to strain a portion of the ring linearly; and a level adjusting mechanism, which adjusts a level of the portion of the ring strained linearly.

Preferably, the level adjusting mechanism comprises a pushing member which pushes the pair of receiving members upwardly by an elastic force, and a level restricting member which restricts the level of the ring applied to the receiving member by being contacted with the ring.

The aforementioned receiving member includes a roller which is held in a rotatable manner.

According to another aspect of the present invention, there is provided a method for assembling a belt or a method for manufacturing a belt, by fastening a plurality of plate-like elements juxtaposed in a same orientation and in a circular manner using a ring, characterized by comprising: pushing diametrically opposed two portions of the ring in opposite directions thereby straining an intermediate portion of the ring between pushed portions linearly; attaching the element to the strained portion of the ring; moving the element attached to the ring in a length direction of the ring; and thereafter attaching another element to the strained portion of the ring.

The aforementioned element comprises a saddle face on which two rows of the rings are disposed in parallel to each other, and a stopper portion which is erected respectively on width ends of the saddle face to protrude toward an outer circumferential side in case the elements are juxtaposed in a circular manner, and which holds the rings disposed on the saddle face.

According to the present invention, the ring is applied to the pair of receiving member, and the portion of the ring between the receiving members is strained linearly by elongating a distance between the receiving members. The portion of the ring thus strained linearly can be deformed or bent easily unless the tension on the ring is not especially increased. Therefore, the element can be attached to the portion of the ring thus strained linearly utilizing such characteristics.

As the progress of attachment of the element to the ring, a number of the elements attached to the ring is increased and eventually the elements are attached to the ring even around the receiving member. As a result, the element is interposed between the ring and the receiving member, and sandwiched between the second receiving faces of the receiving member. In this situation, according to the belt assembling apparatus of the first invention, the distance between the receiving members is adjusted to keep the tension of the ring comparable to that of the case in which the ring is applied to the receiving member without interposing the element therebetween. Therefore, flexibility of the strained portion of the ring to be bent or deformed is kept comparable to the flexibility of the case before the element is interposed between the ring and the receiving member. For this reason, the elements can be attached to the ring easily and continuously.

As described, a number of the elements attached to the ring is increased as the progress of the attachment of the element to the ring, and those elements are eventually attached to the ring even around the receiving member. As a result, the element is interposed between the ring and the receiving member, and sandwiched between the second receiving faces of the receiving member. In this situation, according to the belt assembling apparatus of the second invention, the level of the portion of the ring strained linearly is kept to a constant level by the level adjusting mechanism. Therefore, the level of the portion of the ring to which the elements are supplied and attached can be kept to the constant level. For this reason, the element can be attached to an entire length of the ring easily and continuously

In addition, according to the present invention, although the element having stopper portions for holding two rows of the rings is used to be attached to the rings, the rings can be bent or twisted easily at the portion strained linearly Therefore, the elements can be attached to the rings easily so that the belt can be assembled or manufactured easily.

### BRIEF DESCRIPTION OF THE DRAWINGS

Fig. 1 is a front view showing one example of the belt assembling apparatus according to the present invention.
Fig. 2 is a top view of the belt assembling apparatus shown in Fig. 1.
Fig. 3 is a partial view showing a configuration of a groove of the roller.
Fig. 4 is an explanatory view showing a difference between a distance between the rollers in case the ring is applied to the rollers and a distance between the rollers in case the elements are applied to the rollers.
Fig. 5 is a front view showing another example of the belt assembling apparatus according to the present invention.
Fig. 6 is a view from a section of the apparatus shown in Fig. 5 between the arrows VI.
Fig. 7 is a side view of the apparatus shown in Fig. 5.
Fig. 8 is a partial view showing a situation in which the level of the ring is restricted by an adjuster roller.
Fig. 9 is a view schematically showing a continuously variable transmission using the belt to which the present invention is applied.
Fig. 10 is a front view showing the element forming the belt to which the present invention is applied.
Fig. 11 is a front view showing the block used in conventional belts.

### BEST MODE FOR CARRYING OUT THE INVENTION

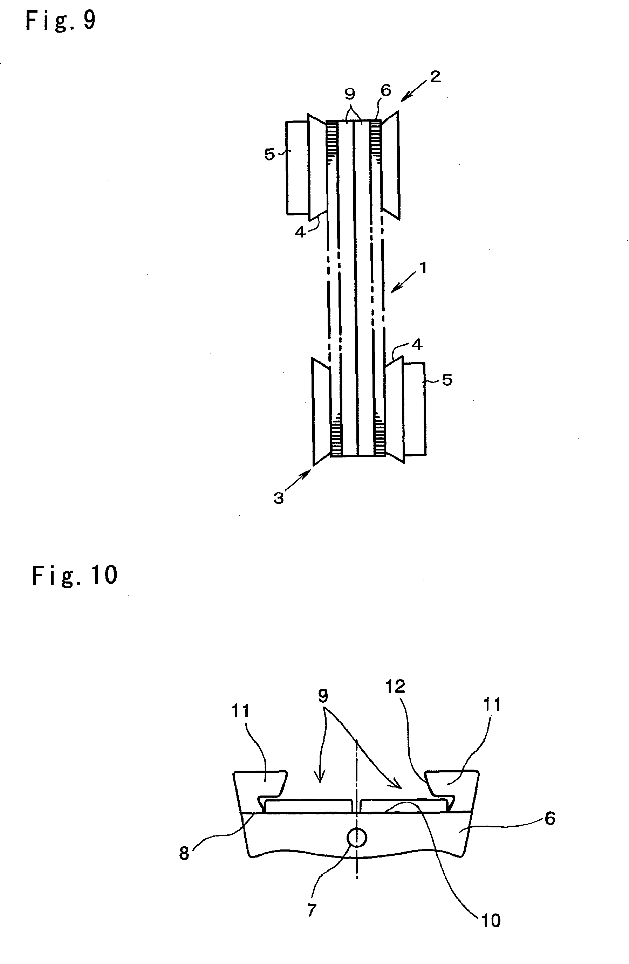

Next, examples of the present invention will be explained hereinafter. A belt to which the present invention is applied is adapted to be used in a continuously variable transmission. Specifically, a groove whose cross-sectional shape is V-shaped is formed on an outer circumference of the pulley of the continuously variable transmission, and the belt is applied to the groove of the pulley for the purpose of transmitting torque by a frictional force between the belt and pulleys. For example, as schematically shown in Fig. 9, a belt 1 is applied to a drive pulley 2 and a driven pulley 3 of the continuously variable transmission. Each pulley 2 and 3 comprises a pair of fixed sheave and movable sheave individually having a tapered face and being opposed to each other. Therefore, V-shaped groove 4 is formed between those sheaves, and a width of the groove 4 is varied by reciprocating the movable sheave by an actuator 5 such as hydraulic cylinder.

The belt 1 thus used is formed by fastening a plurality of elements in a circular manner by a ring, and both side faces or lateral faces thereof are tapered to be V-shaped. Fig. 10 shows an example of an element 6 used in the belt 1 shown in Fig. 9. Specifically, the element 6 is a plate-like member made of metal, and the elements 6 of same configuration and same dimensions are juxtaposed annularly in the same orientation. For the purpose of positioning the juxtaposed elements 6 vertically and horizontally, a male connection 7 as a protrusion is formed on one of the faces of the element 6, and a (not shown) female connection as a hole into which the male connection 7 is inserted loosely is formed on the opposite face. Specifically, the hole is formed by partially depressing one of the faces of the element 6, and the male connection 7 is thereby protruded from the opposite face of the element 6. Therefore, by inserting the male connection 7 into the hole of the adjoining element, a relative movement of the juxtaposed elements 6 in the radial direction, that is, in the vertical and horizontal directions can be restricted.

As described, the elements 6 are juxtaposed in a circular manner. Therefore, some of the elements 6 are inevitably juxtaposed not parallel to one another, in other words, some of the elements 6 being juxtaposed are inevitably spread like a fan (i.e., radially) around a center of curvature of the belt 1. In order to allow the elements 6 thus oscillated in a fan-like fashion to be contacted with one another, a rocking edge 8 is formed on the element 6. Specifically, the rocking edge 8 is a boundary or a boundary area at which the thickness of the element 6 is changed, and the rocking edge 8 is formed at a substantially center of the element 6 in the height direction while extending in a width direction of the element 6 (i.e., in a direction parallel with a rotational center axis of the pulley).

In case the belt 1 is applied to the pulleys 2 and 3, a circumferential length of an array of the elements 6 is longer at an upper side of the element 6 (that is, at an outer circumferential side of the belt 1). Therefore, clearances between the elements 6 around the pulley are widened at the upper portion thereof. To the contrary, the circumferential length of the array of the elements 6 is shorter at a lower side of the element 6 (that is, at an inner circumferential side of the belt 1). Therefore, the clearances between the elements 6 are narrowed at the lower portion thereof. For this reason, a thickness of the lower portion of the element 6 is reduced gradually toward a lower end thereof, and the portion at which the thickness of the element 6 is thus changed serves as the rocking edge 8. Thus, the element 6 is allowed to oscillate with respect to the rocking edge 8 to spread in the fan-like fashion, that is, a pitching of the elements 6 is allowed by the rocking edge 8. In addition, the rocking edge 8 is necessary to be formed only on one of the faces of the element 6. For example, the rocking edge 8 is formed on the face on which the male connection 7 is formed.

The element 6 further comprises a saddle face 10 on which a ring 9 is disposed (or arranged). Since the ring 9 fastening the elements 6 is thus contacted with the saddle face 10, a contact pressure between the ring 9 and the saddle face 10 is increased in case the belt 1 is transmitting the torque. Meanwhile, when the elements 6 moving ahead in the straight region enter into the groove of the pulleys 2 or 3 and oscillated in the fan-like fashion, the ring 9 slides on the saddle face 10 and this will result in a generation of large frictional force. Therefore, in order not to increase a moment resulting from such frictional force, the saddle face 10 is formed on a portion close to the rocking edge 8 as much as possible. That is, the saddle face 10 is formed at a substantially intermediate portion in the height direction of the saddle face 10.

The ring 9 of the belt 1 is formed by accumulating thin metal layers, and two rows of the rings 9 are arranged parallel to each other in the width direction thereof on the saddle face 10 thereby fastening the elements 6. Specifically, a width of the saddle face 10 is wider than a total width of the two rows of rings 9 arranged parallel to each other. According to the present invention, the ring 9 is disposed on the saddle face 10 to fasten the element array in the circular manner and to hold the elements 6 not to deviate outwardly in the radial direction. However, in addition to the above-mentioned functions, the ring 9 also functions to draw the elements 6 being discharged from the groove of the pulley 2 or 3 out of the groove. For this purpose, in order to prevent the ring 9 from deviating radially outwardly from the elements 6, a stopper portion is formed to hold the ring 9 in the space between the stopper portion and the saddle face 10.

In the example shown in Fig. 10, a hook portion 11 is erected respectively on both width ends of the element 6 while extending upwardly and covering the saddle face 10 partially from above. As shown in Fig. 10, the hook portion 11 is a latch (or inversed L-shaped) portion adapted to hold the width ends of the rings 9 disposed parallel to each other loosely in the clearances between the saddle face 10 and the hook portion 11. End portions of each hook portion 11 are distant from each other, and a clearance therebetween serves as an opening 12 to the saddle face 10. The clearance between the hook portions 11, in other words, an opening width of the saddle face 10 is wider than a width of one of the rings 9, but narrower than a total width of two rows of rings 9.

As described, according to the example of the belt 1 to which the present invention is applied, the individual width of the ring 9 is thus narrower than the width of the opening 12 of the element 6, but the total width of two rows of the rings 9 is thus wider than the width of the opening 12 of the element 6. Therefore, in case of fastening all of the elements 6 by one of the rings 9 previously and then fastening the elements 6 by the other ring 9, the elements 6 fastened by said one of the rings 9 may be disengaged from the ring 9 during the subsequent fastening work of the elements 6 by the other ring 9. Thus, the elements 6 cannot be fastened by the rings 9 smoothly. In addition, the total width of the two rows of rings 9 arranged parallel to each other in the width direction is wider than the width of the opening 12. That is, the rings 9 cannot be disposed on the saddle face 10 of the element 6 while being situated parallel to each other. Therefore, according to the present invention, the belt 1 is assembled and manufactured by a procedure and an apparatus to be explained hereinafter.

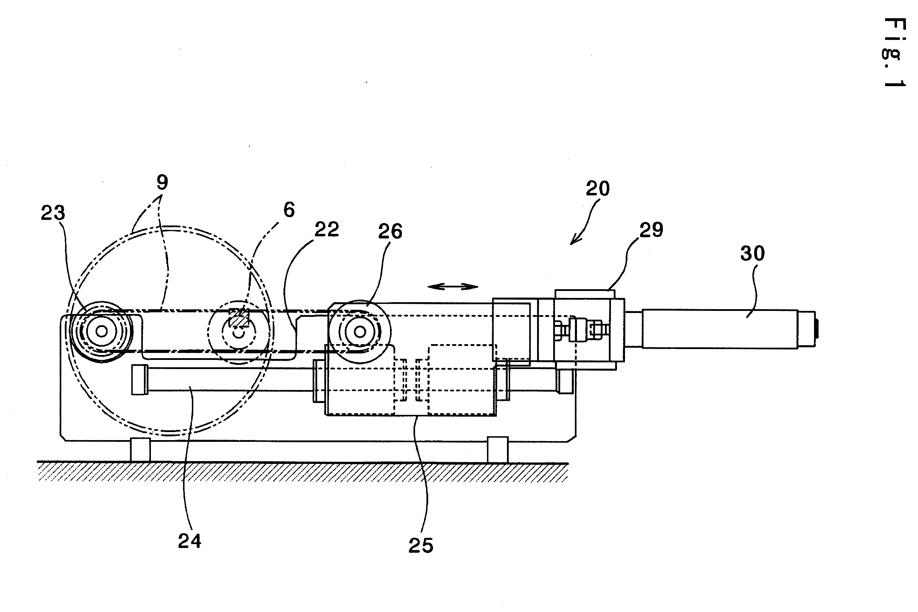

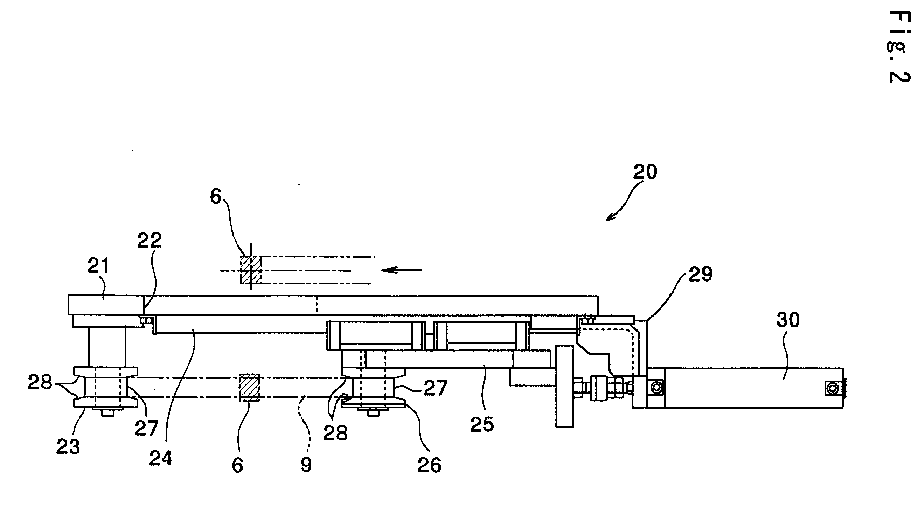

An example of the apparatus of the present invention is shown in Figs. 1 and 2. An apparatus 20 shown in Figs. 1 and 2 is adapted to hold two rows of the rings 9 forming the belt 1 parallel to each other ovally or elliptically. Specifically, the apparatus 20 comprises a rack 21 as a metal plate erected vertically, and a portion of the rack 21 is eliminated in a rectangle shape at its upper portion to form a cutout 22. A roller 23 is attached rotatably to the rack 21 at one of the end sides of the cutout 22 in a horizontal direction (as will be tentatively called a front end portion of the rack 21). Specifically, the roller 23 serves as a receiving member, and mounted on a support shaft attached to a side face of the rack 21 to protrude horizontally

A linear guide 24 is attached to the side face of the rack 21 below the cutout 22 to extend horizontally, and a slider 25 is engaged with the linear guide 24 in a manner to move back and forth horizontally The slider 25 is a flat plate member, and a roller 26 paired with the roller 23 is attached to a side face of the slider 25. Specifically, a support shaft is attached to the side face of the slider 25 to protrude horizontally in parallel with a rotation axis of the roller 23, and the roller 26 is mounted on the support shaft in a rotatable manner. Accordingly, this another roller 26 also serves as a receiving member together with the aforementioned roller 23.

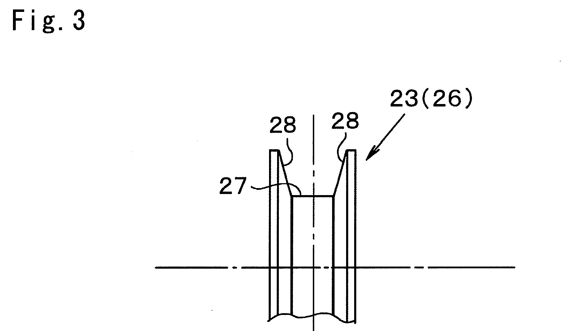

To the rollers 23 and 26, the aforementioned ring 9 is applied directly, or an array of the elements 6 attached to the ring 9 is applied, and in this situation, the rollers 23 and 26 apply a predetermined tension to the ring 9 on the rollers 23 and 26. For this purpose, the rollers 23 and 26 are provided respectively with a groove whose shape is congruent with the ring 9 and the element 6. An example of the groove of the rollers 23 and 26 is shown in Fig. 3. As shown in Fig. 3, a trunk portion 27 is formed on an outer circumferential face of the roller 23 (or 26), and a width of the trunk portion 27 is substantially identical to a total width of two rows of the rings 9. In addition, inner walls 28 are formed on both axially end portions of the trunk portion 27 to extend radially outwardly in a manner to widen a clearance therebetween. Thus, the groove is formed by the trunk portion 27 and the inner walls 28. Specifically, the width of the trunk portion 27 is identical to that of the saddle face 10 of the element 6 or slightly narrower than that of the saddle face 10 of the element 6. Meanwhile, the narrowest width of the element 6 is wider than the widths of the saddle face 10 and the trunk portion 27. Therefore, two rows of the rings 9 are contacted to the trunk portion 27 when applied to the roller 23 or 26, and the element 6 is sandwiched between the inner walls 28 in the outer circumferential side from the trunk portion 27 when applied to the roller 23 or 26. Accordingly, the trunk portion 27 or an outer circumferential face thereof serves as a first receiving face, and the inner walls 28 serve as second receiving faces.

In order to apply a predetermined tension to the ring 9 being applied to the rollers 23 and 26, the apparatus 40 is provided with an actuator. Specifically, a bracket 29 is attached to a rear end portion of the rack 21 (i.e., to the opposite side of the front end portion to which the roller 23 is attached), and a pulling cylinder 30 is attached to the bracket 29 in a manner to orient a rod thereof to the slider 25. Specifically, the pulling cylinder 30 is a direct actuating type actuator such as an air cylinder, a hydraulic actuator, an electric cylinder and so on, and the rod of the pulling cylinder 30 is connected with the slider 25.

The pulling cylinder 30 is adapted to move the slider 25 backwardly to the right side in Figs. 1 and 2 thereby widening a distance between the rollers 23 and 26 to apply a tension to the ring 9. For this purpose, a rod of the actuator is drawn backwardly when a hydraulic pressure or an electric power is supplied to the pulling cylinder 30, and the rod is returned by a return spring or the like. Therefore, a single actuating type actuator, which is incapable of generating a thrust force in an opposite direction to return the rod, can be used as the pulling cylinder 30. In addition, the tension applied to the ring 9 is kept constant to a predetermined tension. For example, a pressure to be supplied to the pulling cylinder 30 is kept constant by a regulator valve or the like to keep the force for pulling the slider 25 constant.

Therefore, even if the distance between the rotational axes of the rollers 23 and 26 is varied between a case in which the ring 9 is contacted directly to the rollers 23 and 26, and a case in which the elements 6 attached to the ring 9 are sandwiched between the inner walls 28 of the rollers 23 and 26, the tension of the ring 9 is kept constant by moving the slider 25 in the amount of the difference in the distance between the rotational axes of the rollers 23 and 26. The pulling cylinder 30 thus structured corresponds to the thrust mechanism of the present invention.

Next, a method of attaching the element 6 to the ring 9 using the apparatus 20, and a manufacturing method of the belt using the apparatus 20 will be explained hereinafter. First of all, the slider 25 is moved forward thereby moving the roller 26 close to the roller 23, and two rows of the rings 9 are applied to those rollers 23 and 26, as indicated by broken lines in Fig. 1.

Then, the slider 25 is moved backwardly toward the right side in Fig. 1 by the pulling cylinder 30. As a result, the roller 26 attached to the slider 25 is moved backwardly together with the slider 25. Therefore, a distance between the rollers 23 and 26 is elongated, and diametrically symmetrical two portions of the rings 9 are thereby pulled diametrically outwardly. Consequently, the rings 9 are deformed into an oval or elliptical shape, and eventually, a portion of each ring 9 between the rollers 23 and 26 is strained substantially linearly The purpose of thus straightening the intermediate portion of the ring 9 is to facilitate a deformation of the rings 9, that is, to bend or twist the intermediate portion of the rings 9 easily in the event of attaching the element 6 to the ring 9 while holding the outer side edge of one of the rings 9 by the hook portion 11. For this purpose, a tension to strain the ring 9 linearly is kept to an extent that the strained portion of the ring 9 is allowed to be deformed easily when the element 6 is attached thereto.

Meanwhile, a predetermined number of the elements 6 are set in a magazine or holder while being juxtaposed in a same orientation to be attached to the rings 9 simultaneously The magazine or holder thus holding the elements 6 therein is inserted into the cutout 22 formed in the rack 21 to be situated in an inner circumferential side of the rings 9, and the elements 6 are attached to the strained portion of the rings 9 from the inner circumferential side (i.e., from a lower side). As described, the total width of two rows of the rings 9 is wider than the opening width of the opening 12 of the element 6. Therefore, the rings 9 are deformed to be overlapped partially thereby narrowing the total width thereof. In this situation, the portion of each ring 9 to which the elements 6 are attached is strained linearly so that the elements 6 can be attached to the rings 9 easily

The elements 6 can be attached to the rings 9 by various kinds of procedures. For example, first of all, an outer side edge of one of the rings 9 is inserted into a space between one of the hook portions 11 of the element 6 and the saddle face 10. Then, said one of the rings 9 is pulled downwardly together with the element 6, and the other ring 9 is displaced widthwise to be overlapped partially on said one of the rings 9. In this situation, the other ring 9 has to be twisted to be overlapped, however, the portion to be twisted is strained linearly so that the rings 9 can be partially overlapped easily

As a result, the total width of the rings 9 is reduced narrower than the opening width of the opening 12 of the element 6 so that the outer side edge of the other ring 9 is prevented from being contacted with the hook portion 11 even when it is passed through the opening 12. Therefore, two rows of the rings 9 thus overlapped partially can be disposed on the saddle face 10 by lifting the element 6 holding the outer side edge of one of the rings 9 by the hook portion 11. In this situation, the overlapped rings 9 are returned to be situated parallel to each other, and an outer side edge of the other ring 9 is inserted into a space between the other hook portion 11 and the saddle face 10 to be held by the other hook portion 11. As a result, a plurality of the elements 6 is attached to the rings 9. The elements 6 may be attached to the rings 9 not only manually but also automatically using an automated machinery or an industrial robot adapted to handle the elements 6 as explained above.

The elements 6 thus attached to the rings 9 are moved away from the strained portion of the ring 9, that is, moved away from the assembling position by driving the rings 9 by rotating the rollers 23 and 26. Then, remaining elements 6 are to be attached to the rings 9 by repeating the above-explained procedures.

With an increase in the number of the elements 6 attached to the rings 9, an array of the elements 6 attached to the rings 9 are eventually pushed into the groove of each of the roller 23 and 26 between the inner walls 28 by the rotating the rollers 23 and 26. As a result, the rings 9 are detached from the trunk portions 27 of each of the rollers 23 and 26 toward the outer circumferential side, and radii of the rings 9 around the rollers 23 and 26 are thereby increased. However, the pulling cylinder 30 is adapted or controlled to keep the tension being applied to the rings 9 constant. Therefore, when the elements 6 enter into the groove of the roller 23 or 26, the slider 25 is moved forward toward the left side in Fig. 1 thereby shortening the distance between the rollers 23 and 26 in accordance with the dimensions of the element 6.

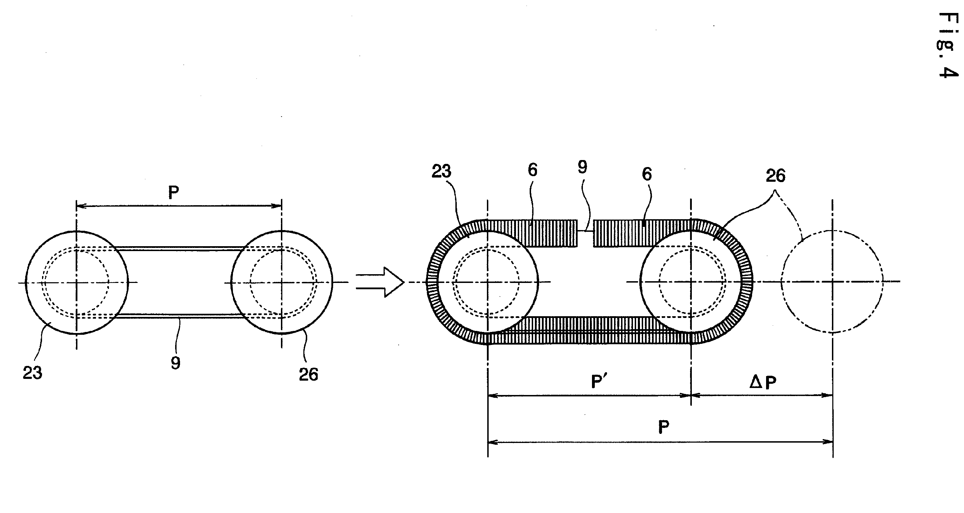

Specifically, the distance (or pitch) between rotation axes of the rollers 23 and 26 under the situation in which only the rings 9 are applied to the rollers 23 and 26 is represented by P in Fig. 4. However, after the elements 6 has been attached to the rings 9 even around the rollers 23 and 26, the distance between the rotation axes of the rollers 23 and 26 is shortened as indicated by P'. That is, the distance P between the rotation axes of the rollers 23 and 26 is reduced in the amount of predetermined distance ΔP after the elements 6 are attached to the rings 9 around the rollers 23 and 26. Therefore, the tension on the straight portion of each of the ring 9 can be kept substantially constant. Therefore, an assembling work of the belt 1 can be carried out in a stable manner. In other words, the assembling work of the belt 1 can be automated easily.

When the array of the elements 6 are interlinked with one another, specifically, when each clearance among the elements 6 (or an endplay) becomes a predetermined value so that the male connections 7 of the elements 6 are respectively inserted into the hole of the adjoining element 6, the assembling work of the belt 1 is completed. Then, the rings 9 (i.e., the assembled belt 1) is dismounted from the rollers 23 and 26 by moving the slider 25 in the forward direction thereby moving the roller 26 toward the roller 23.

Thus, according to apparatus 20, the assembling method, and the manufacturing method of the present invention, two rows of the rings 9 are held parallel to each other while being strained the partially, and the elements are attached to the strained portion of the rings 9. Therefore, the elements 6 can be attached to the rings 9 easily Moreover, the tension for straining the rings 9 is equalized in both of a case in which the rings 9 are contacted to the trunk portion 27 of the rollers 23 and 26, and a case in which the elements 6 are sandwiched between the inner walls 28 of the rollers 23 and 26. Therefore, an assembling work of the belt 1 can be carried out in a stable manner. In other words, the assembling work of the belt 1 can be automated easily

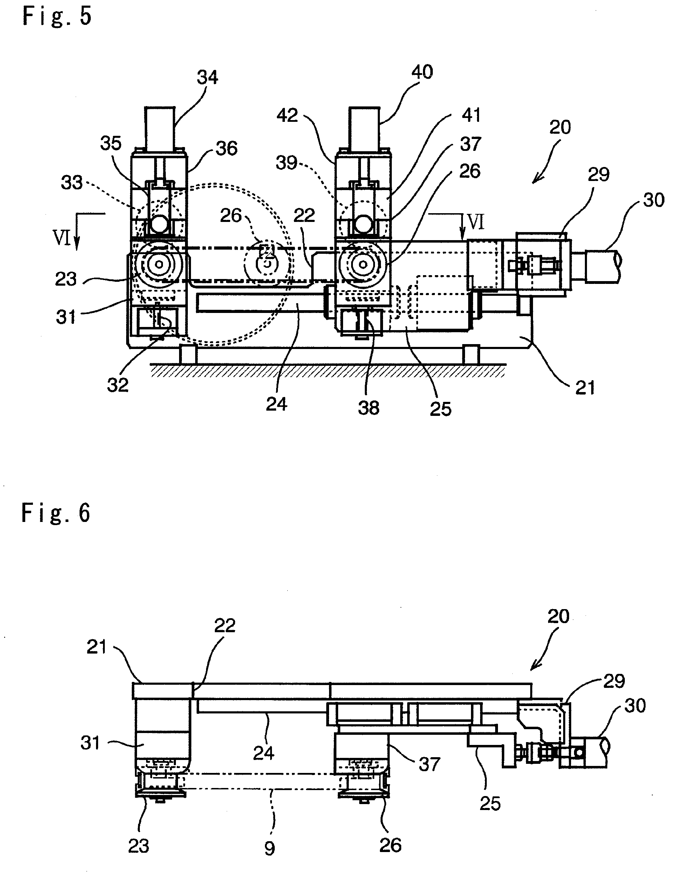

Next, here will be explained another example of the apparatus of the present invention. As described, the above-explained example is adapted to vary the distance (or pitch) between the rollers 23 and 26 for the purpose of keeping the tension on the rigs 9 constant even after the elements 6 are attached to the rings 9 around the rollers 23 and 26. In addition, a level of the ring 9 can be kept to a constant level by adjusting vertical positions of the rollers 23 and 26. An example of such structure is shown in Figs 5 to 7. According to the example shown in Figs. 5 to 7, the roller 23 is not attached directly to the front end of the rack 21 but attached to the rack 21 through a linear guide 31. The linear guide 31 comprises a guide rail attached to the rack 21 in the vertical direction, and a slider adapted to be reciprocated vertically along the guide rail. A support shaft for the roller 23 is formed on the slider to protrude thereforem, and an elastic member (e.g., a coil spring) 23 for pushing the slider upwardly is arranged underneath the roller 23.

In addition, an adjuster roller 33 for restricting the vertical position of the rings 9 on the roller 23 is arranged above the roller 23. Specifically a level adjusting cylinder 34 is arranged on an upper portion of the rack 21 while being oriented downwardly. A movable block 35 is attached to a rod of the level adjusting cylinder 34, and the adjuster roller 33 is attached to the movable block 35 in a rotatable manner. A rotation axis of the adjuster roller 33 is parallel to a rotation axis of the roller 23, and a center position of the adjuster roller 33 in the axial direction is congruent with that of the roller 23. Therefore, the rings 9 are sandwiched by the rollers 23 and 33. Here, a bracket 36 fixing the level adjusting cylinder 34 to the rack 21 is adapted to guide the movable block 35 in the vertical direction.

Also, the other roller 26 is not attached to the slider 25 directly but attached to the slider 25 through a linear guide 37. As the linear guide 31 arranged on the front end of the rack 21, the linear guide 37 also comprises a guide rail attached to the slider 25 in the vertical direction, and a slider adapted to be reciprocated vertically along the guide rail. A support shaft for the roller 26 is formed on the slider to protrude thereforem, and an elastic member (e.g., a coil spring) 38 for pushing the slider upwardly is arranged underneath the roller 26. Here, the elastic member 38 is attached to the slider 25 to be moved together with the roller 26.

In addition, an adjuster roller 39 for restricting the vertical position of the rings 9 on the roller 26 is arranged above the roller 26. Specifically, a level adjusting cylinder 40 is arranged on an upper portion of the slider 25 while being oriented downwardly. A movable block 41 is attached to a rod of the level adjusting cylinder 40, and the adjuster roller 39 is attached to the movable block 41 in a rotatable manner. A rotation axis of the adjuster roller 39 is parallel to a rotation axis of the roller 26, and a center position of the adjuster roller 39 in the axial direction is congruent with that of the roller 26. Therefore, the rings 9 are sandwiched by the rollers 26 and 39. Here, a bracket 42 fixing the level adjusting cylinder 40 to the slider 25 is adapted to guide the movable block 41 in the vertical direction.

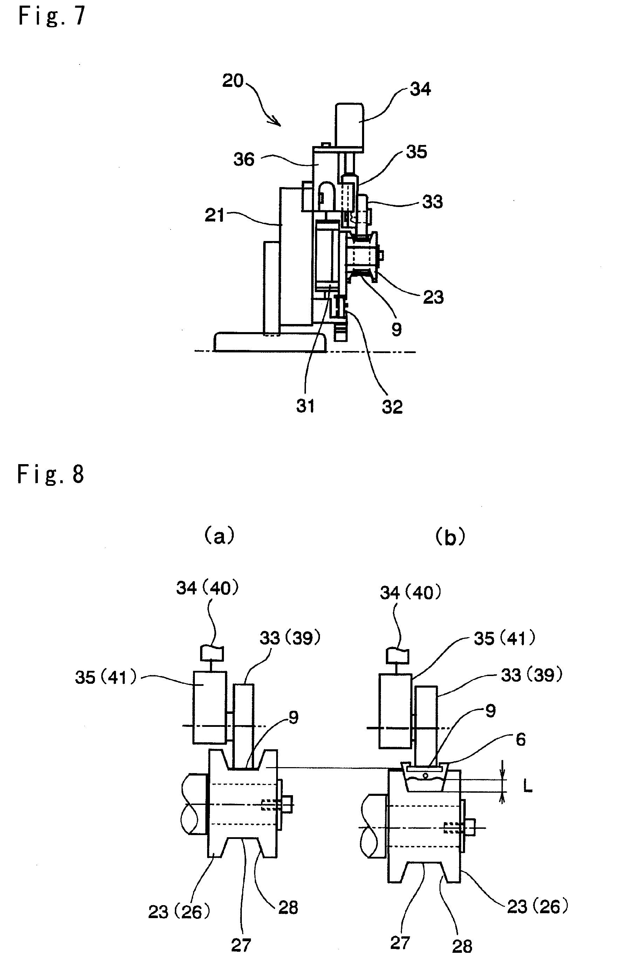

Here will be explained a procedure of attaching the elements 6 to the rings 9 using the apparatus shown in Figs. 5 to 7. That is, a manufacturing method of a belt using the apparatus shown in Figs. 5 to 7 will be explained hereinafter. First of all, the adjuster rollers 33 and 39 are respectively moved upwardly by the level adjusting cylinders 34 and 40 to be isolated sufficiently from the rollers 23 and 26. In this situation, the slider 25 is moved toward the roller 23 of the front end side thereby shortening the distance between the rollers 23 and 26. Then, as the example previously explained, two rows of the rings 9 are applied to the rollers 23 and 26 in parallel to each other. Thereafter, the slider 25 is moved backwardly by the pulling cylinder 25 to hold the rings 9 in an oval or elliptical manner. During the process, or after widening the distance between the rollers 23 and 26 to a predetermined distance, the adjuster rollers 33 and 39 are moved downwardly by actuating the level adjusting cylinders 34 and 40. As a result, the rigs 9 are sandwiched between the roller 23 and the adjuster roller 33, and between the roller 26 and the adjuster roller 39, as shown in Fig. 8 (a).

Then, the element 6 is individually attached to the portion of the rings 9 between the rollers 23 and 26 thus strained linearly one the above-explained procedures. Alternatively, a predetermined number of the elements 6 may also be attached to the portion of the rings 9 thus strained linearly at the same time by the above-explained procedures. The element(s) 6 attached to the rings 9 is/are moved away from the strained portions of the rings 9, that is, moved away from the assembling position by driving the rings 9 by rotating the rollers 23 and 26. With an increase in the number of the elements 6 attached to the rings 9, the elements 6 attached to the rings 9 eventually enter into the groove of the roller 23 or 26. In this situation, the roller 26 is moved forward by the pulling cylinder 30 together with the slider 25 thereby shortening the distance between the rollers 23 and 26 in accordance with the dimensions of the element 6. As a result, the tension acting on the rings 9 is kept constant as in the example previously explained.

According to the example shown in Figs. 5 to 7, when the element 6 reaches the roller 23 or 26, the element 6 intervenes between the roller 23 or 26 and the adjuster roller 33 or 39 situated above the roller 23 or 26. As described, however, the levels of the adjuster rollers 33 and 39 are controlled by the level adjusting cylinders 34 and 40. On the other hand, the rollers 23 and 26 are pushed upwardly by the elastic forces of the elastic members 32 and 38 so that the rollers 23 and 26 are allowed to reciprocate vertically. Therefore, when the element 6 intervenes between the roller 23 and the adjuster roller 33 or between the roller 26 and the adjuster roller 39, the roller 23 or 26 is pushed relatively downwardly in the amount of a length L which corresponds to a distance between the trunk portion 27 and the rings 9 isolated from the trunk portion 27. That is, since the adjuster roller 33 or 39 is contacted with the outer circumferential face of the rings 9, the levels of the rings 9 will not be changed even in this situation but the level of the roller 23 or 26 is lowered, as shown in Fig. 8 (b).

Thus, according to the apparatus shown in Figs. 5 to 7, the levels of the rings 9 are restricted by the adjuster rollers 33 and 39. Therefore, the levels of the rings 9 will not be changed in both of the case in which the rings 9 are contacted to the rollers 23 and 26, and the case in which the elements 6 are sandwiched between the inner walls 28 of the rollers 23 and 26. For this reason, the tension and the level of the strained portion of each of the ring 9 to which the element 6 is attached can be kept substantially constant. That is, assembling position is kept to the constant level. As a result, the elements 6 can be attached to the rings 9 easily. Moreover, in case of using an automated machinery or an industrial robot, it is unnecessary to adjust an operating position of the automated machinery or industrial robot. Therefore, the assembling work of the belt 1 can be automated easily.

After the completion of the attachment of the elements 6 to the rings 9, the roller 26 is moved close to the roller 23 and the adjuster rollers 33 and 39 are moved upwardly to be detached from the rings 9. Then, the assembled belt 1 is dismounted from the rollers 23 and 26.

Here, the present invention should not be limited to the examples thus far explained. For example, an appropriate member comprising a smooth curved face may also used as the level restricting member to be contacted with the receiving member or the ring to restrict the uppermost position of the receiving member or the ring, instead of using a roller.

In addition, the present invention should not be limited to the apparatus and the method for assembling the belt using two rows of rings. That is, a number of the rings to be used should not be limited to two rings. As described, the rings are adapted to fasten the elements by being held by the hook portions at the outer side edge of each ring. Therefore, at least two rings are required to fasten the element but three or more rings may also be used to fasten the elements. Further, the distance between the rollers or the receiving members to which the rings are applied may also be varied by moving both members in opposite directions, instead of moving one of those members.

## Claims

1. A belt assembling apparatus for assembling a belt, by fastening a plurality of plate-like elements juxtaposed in a same orientation and in a circular manner using a ring, **characterized by** comprising:
at least a pair of receiving members respectively comprising a first receiving face to which the ring is applied, and second receiving faces respectively extending radially outwardly from the first receiving face to hold the element attached to the ring therebetween; and
a thrust mechanism, which straightens a portion of the ring between the receiving members by moving at least one of the receiving members away from the other receiving member to apply tension to the ring, and which adjusts a distance between the receiving members thereby equalizing the tension being applied to the ring in both of a case in which the ring is applied to the receiving member and a case in which the element attached to the ring is applied to the receiving member.

2. A belt assembling apparatus for assembling a belt, by fastening a plurality of plate-like elements juxtaposed in a same orientation and in a circular manner using a ring, **characterized by** comprising:
at least a pair of receiving members to which the ring and the element attached to the ring are applied, and which move away from each other in a horizontal direction thereby applying a tension to the ring to strain a portion of the ring linearly; and
a level adjusting mechanism, which adjusts a level of the portion of the ring strained linearly.

3. The belt assembling apparatus as claimed in claim 2, wherein the level adjusting mechanism comprises:
a pushing member which pushes the pair of receiving members upwardly by an elastic force; and
a level restricting member which restricts the level of the ring applied to the receiving member by being contacted with the ring.

4. The belt assembling apparatus as claimed in any of claims 1 to 3, wherein:
the receiving member includes a roller which is held in a rotatable manner.

5. A belt assembling method for assembling a belt, by fastening a plurality of plate-like elements juxtaposed in a same orientation and in a circular manner using a ring, **characterized by** comprising:
pushing diametrically opposed two portions of the ring in opposite directions thereby straining an intermediate portion of the ring between pushed portions linearly;
attaching the element to the strained portion of the ring;
moving the element attached to the ring in a length direction of the ring; and
thereafter attaching another element to the strained portion of the ring.

6. The belt assembling apparatus as claimed in any of claims 1 to 4, or the belt assembling method as claimed in claim 5, wherein the element comprises:
a saddle face on which two rows of the rings are disposed in parallel to each other; and
a stopper portion, which is erected respectively on width ends of the saddle face to protrude toward an outer circumferential side in case the elements are juxtaposed in a circular manner, and which holds the rings disposed on the saddle face.

7. A belt manufacturing method for manufacturing a belt, by fastening a plurality of plate-like elements juxtaposed in a same orientation and in a circular manner using a ring, **characterized by** comprising:
pushing diametrically opposed two portions of the ring in opposite directions thereby straining an intermediate portion of the ring between pushed portions linearly;
attaching the element to the strained portion of the ring;
moving the element attached to the ring in a length direction of the ring; and
thereafter attaching another element to the strained portion of the ring.

8. The belt manufacturing method as claimed in claim 7, wherein the element comprises:
a saddle face on which two rows of the rings are disposed in parallel to each other; and
a stopper portion, which is erected respectively on width ends of the saddle face to protrude toward an outer circumferential side in case the elements are juxtaposed in a circular manner, and which holds the rings disposed on the saddle face.
